**Europäisches Patentamt**

**European Patent Office**

**Office européen des brevets**

(19)

(11) Veröffentlichungsnummer: **0 086 407**
**B1**

(12) # EUROPÄISCHE PATENTSCHRIFT

(45) Veröffentlichungstag der Patentschrift:
06.08.86

(51) Int. Cl.⁴: **G 21 C 13/02**

(21) Anmeldenummer: 83101027.7

(22) Anmeldetag: 03.02.83

(54) **Vorrichtung zur Aufhängung und Abstützung von Reaktordruckbehältern in Kernreaktoranlagen.**

(30) Priorität: 15.02.82 DE 3205259

(43) Veröffentlichungstag der Anmeldung:
24.08.83 Patentblatt 83/34

(45) Bekanntmachung des Hinweises auf die Patenterteilung:
06.08.86 Patentblatt 86/32

(84) Benannte Vertragsstaaten:
CH DE FR GB LI

(56) Entgegenhaltungen:
DE - A - 2 620 322
DE - B - 2 445 225
DE - C - 2 101 965
US - A - 3 578 564

(73) Patentinhaber: **KRAFTWERK UNION
AKTIENGESELLSCHAFT, Wiesenstrasse 35,
D-4330 Mülheim (Ruhr) (DE)**

(72) Erfinder: **Dorner, Heinrich, Dr., Grazer Strasse 14,
D-8520 Erlangen (DE)**
Erfinder: **Ruf, Richard, Dipl.-Ing., Zenkerstrasse 31,
D-8520 Erlangen (DE)**
Erfinder: **Scholz, Manfred, Zeissstrasse 8,
D-8520 Erlangen (DE)**
Erfinder: **Gollasch, Bernd, Pottensteiner Strasse 16,
D-8500 Nürnberg (DE)**

(74) Vertreter: **Mehl, Ernst, Dipl.-Ing. et al, Postfach 22 01 76,
D-8000 München 22 (DE)**

**Beschreibung**

Die Erfindung bezieht sich auf eine Vorrichtung zur Aufhängung und Abstützung von im wesentlichen zylindrischen Reaktordruckbehältern in Kernreaktoranlagen innerhalb der Reaktorkaverne eines biologischen Schildes, gemäss Oberbegriff des Anspruchs 1.

Eine solche Vorrichtung ist durch die DE-PS 2 101 965 = US-A 3 775 250 bekannt. Bei dieser bekannten Vorrichtung bilden die Tragkonsolen eine bauliche Einheit mit einem die Decke des Reaktorraumes bildenden Ringkastenträger aus Stahl, welcher aus miteinander zusammenschweissbaren Ringkastenträgersegmenten besteht und in eine etwa ringförmige Aussparung am Innenumfang des biologischen Schildes eingefügt ist. Eine Weiterentwicklung dieser bekannten Vorrichtung, welche in das Kernkraftwerk der Gemeinschaftskernkraftwerke Neckar GmbH (GKN) eingebaut ist, weist einen aus Teilsegmenten bestehenden Tragring auf, der unabhängig von den Betonierarbeiten an der biologischen Abschirmung in eine am Innenumfang der biologischen Abschirmung vorgesehene Aussparung eingebaut werden kann. Durch die DE-B 2 445 225 ist es darüber hinaus bekannt, die einzelnen Teilsegmente eines Tragringes nach ihrem Einbringen in die ringförmige Aussparung an den Flanschen ihrer Teilfugen miteinander zu verschrauben.

Die erstgenannte bekannte Vorrichtung mit einem aus zusammenschweissbaren Segmenten bestehenden Ringkastenträger hat sich bei einer Vielzahl von Druckwasser-Kernreaktoranlagen bewährt. Allerdings sind Ringkastenträger- und Tragringkonstruktionen in der Herstellung, Montage und in der Wiederholungsprüfung verhältnismässig aufwendig. Es liegt deshalb die generelle Aufgabe vor, eine Vorrichtung zur Aufhängung und Abstützung von Reaktordruckbehältern anzugeben, welche kostengünstiger und dabei technisch einfach ist, ohne dass jedoch Einbussen hinsichtlich der Sicherheit der Aufhängung und Abstützung und zweckmässig auch hinsichtlich der Erdbebensicherheit in Kauf genommen werden müssten. Insbesondere soll sich die neue Vorrichtung durch folgende Merkmale auszeichnen:

- Freiheit von Schweissnähten,
- geringe Montagegewichte;
- Erhalt grösstmöglicher Zugänglichkeit für die Wiederholungsprüfung;
- keine Bauabhängigkeit, d.h., die Betonierarbeiten am biologischen Schild sollen zum Einbringen des Reaktordruckbehälters nicht unterbrochen werden müssen;
- geringer Wärmetransport von der Stahlstruktur der Tragkonstruktion (Tragkonsolen und Tragpratzen) des Reaktordruckbehälters auf den Beton des Gebäudes.

Erfindungsgemäss wird die gestellte Aufgabe bei einer Vorrichtung gemäss Gattungsbegriff durch die im Kennzeichen des Anspruchs 1 angegebenen Merkmale gelöst. Vorteilhafte Weiterbildungen des Erfindungsgegenstandes sind in den Ansprüchen 2 bis 18 angegeben.

Auf Einrichtungen zur Sicherung des Reaktordruckbehälters gegen Abheben, wie im Oberbegriff des Anspruchs 1 sowie näher in den Ansprüchen 15 und 16 erwähnt, kann verzichtet werden, wenn solche Abhebekräfte, z.B. bedingt durch ein Erdbeben, mit Sicherheit ausgeschlossen werden können. Für die Mehrzahl der Druckbehälterabstützungen sind solche Einrichtungen indessen zweckmässig.

Die mit der Erfindung erzielbaren Vorteile sind vor allem darin zu sehen, dass sie im Vergleich zu einer Tragring- bzw. zu einer Ringkastenträgerkonstruktion bei gleicher Zuverlässigkeit der Abstützung mit etwa 1/3 bis 1/2 der Herstellungs- und Montagekosten auskommt. Sie zeichnet sich insbesondere durch die Erfüllung aller fünf vorstehend definierter Konstruktionsanforderungen aus. Mit ihr is es möglich, einen Reaktordruckbehälter für einen Schwerwasserreaktor, der z.B. einen Aussendurchmesser von 8440 mm und ein Betriebsgewicht von 3200 t aufweist, betriebssicher abzustützen. Die neue Vorrichtung ist aber nicht nur zur Lagerung der Reaktordruckbehälter von Schwerwasserreaktoren geeignet, sondern sie kann allgemein zur Lagerung der Reaktordruckbehälter von Druckwasserreaktoren, welche Tragpratzen an ihrem äusseren Umfang aufweisen, mit Vorteil angewendet werden.

Im folgenden wird die Erfindung anhand eines in der Zeichnung dargestellten Ausführungsbeispiels noch näher erläutert. Darin zeigt:

Fig. 1 einen durch eine vertikale Achsebene gelegten Schnitt durch die Anordnung einer Nische im biologischen Schild mit Tragkonsole und Tragpratze längs der Linie I-I aus Fig. 2;

Fig. 2 einen Querschnitt durch den Reaktordruckbehälter mit seinen Tragpratzen und dem ihn umfassenden biologischen Schild mit seinen Tragkonsolen;

Fig. 3 eine der Tragpratzen und zugehörigen Tragkonsolen aus Fig. 2 vergrössert im Detail, wobei die Zuganker lediglich strichpunktiert angedeutet sind;

Fig. 4 einen Schnitt längs der Linie IV-IV aus Fig. 3 und Fig. 5 einen Schnitt längs der Linie V-V aus Fig. 1, d.h., Nische und Stützschenkelteil in dessen unterem Bereich.

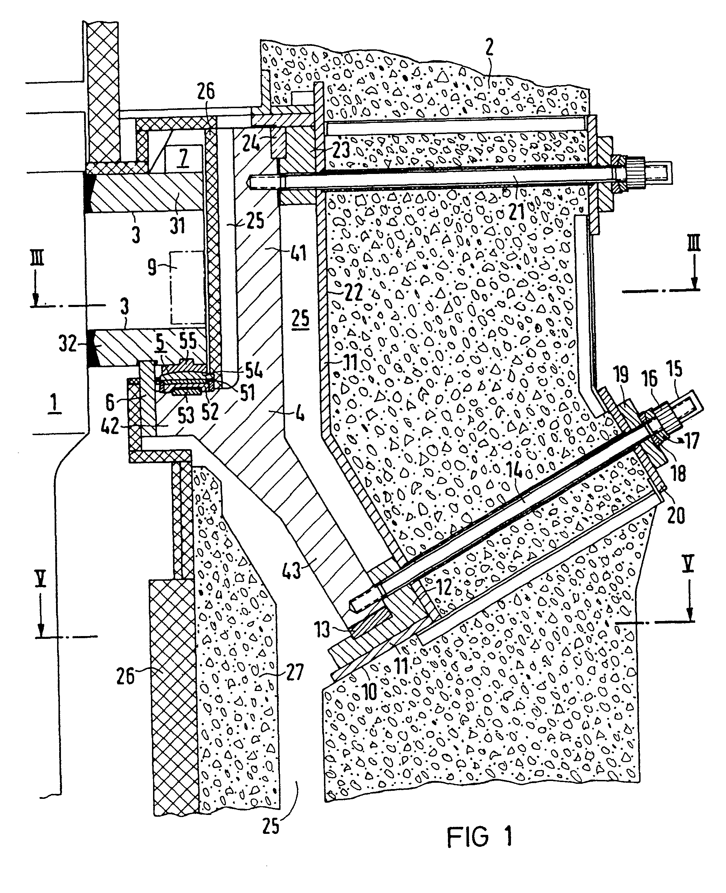

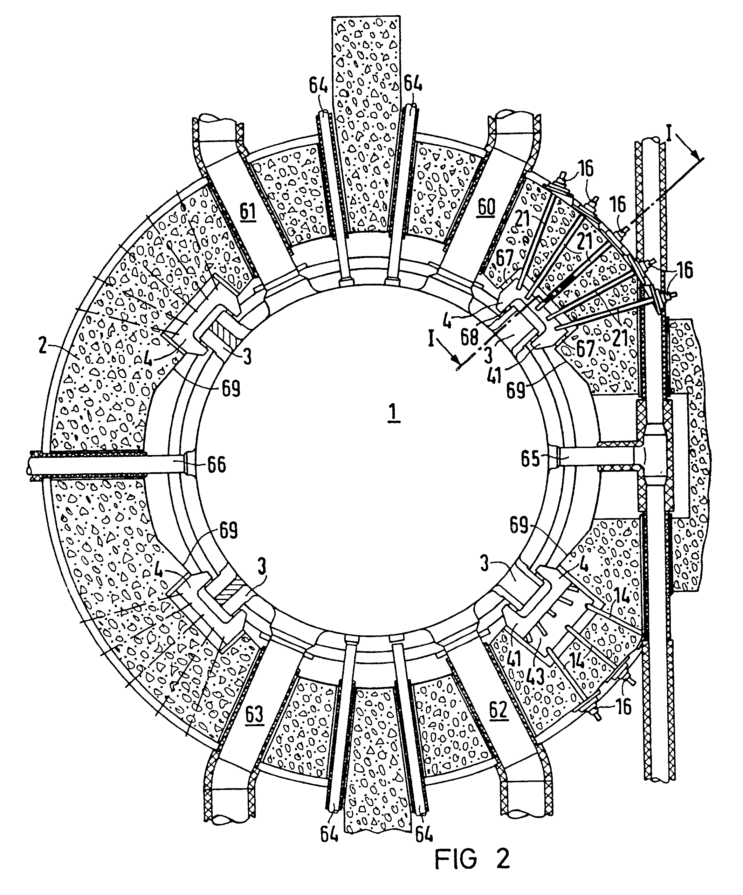

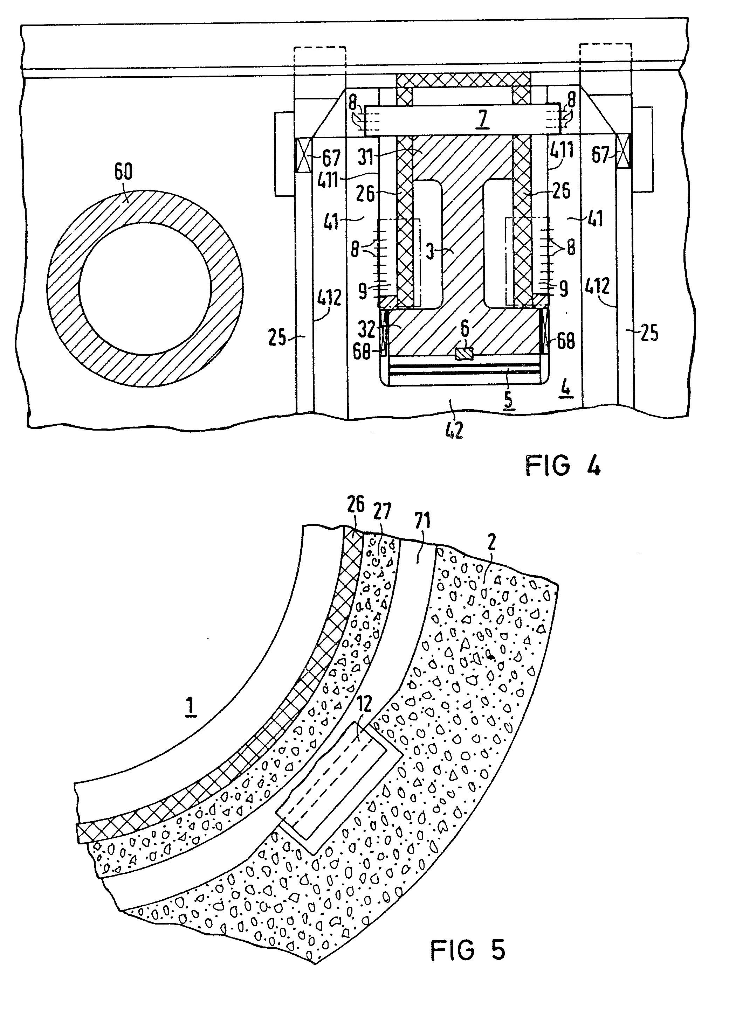

Fig. 1 zeigt als Teil eines Kernreaktors einen senkrechten Schnitt durch eine Vorrichtung zur Aufhängung und Abstützung eines zylindrischen Reaktordruckbehälters 1 in der Reaktorkaverne der Betonstruktur eines biologischen Schildes 2 entlang der in Fig. 2 dargestellten Schnittebene I-I. An den Reaktordruckbehälter 1 sind Tragpratzen 3 mit doppel-T-förmigem Querschnitt angeschweisst, die die Gewichtskraft auf einteilig aus Stahl geschmiedete Tragkonsolen 4 übertragen. Diese bestehen aus einem oberen U-förmigen Querschnitt aufweisenden senkrechten Klauenteil 41 mit einem horizontalen Fortsatz, dem Tragboden 42, der die Tragpratze 3 des Reaktordruckbehälters 1 unterstützt, sowie aus einem unteren um einen Winkel von 30° gegen die senkrechte nach aussen verlaufenden Stützschenkelteil 43, der in einer Nische im biologischen Schild 2 abgestützt ist. Um ein radiales Spiel infolge Wärmedehnung des Reaktordruckbehälters 1 zu gewährleisten, weist das Lager 5 der Tragpratze 3 eine Gleitplatte 51 auf, die mittels einer Passplatte 52 und einer Zentrierscheibe 53 horizontal ausgerichtet auf dem Tragboden 42 angebracht ist. Eine zylindrische, konvexe Auflageplatte 54, die über eine konkave Auflageplatte 55 fest mit der Tragpratze 3 verbunden ist, ist auf der Gleitplatte 51 in einer Dimension frei beweglich. Ein an der Tragkonsole 4 befestigtes Führungselement 6 steht im Eingriff mit der Tragpratze 3. Es ist dort radial mit einem Spiel von ca. 30 mm, tangential aber ohne Spiel eingepasst. Ein Abgleiten der Tragpratze 3 von der Tragkonsole 4 wird dadurch verhindert. Um ein Abheben des Reaktordruckbehälters 1, z.B. durch Erdbebenkräfte zu verhindern, geht von den inneren Seitenwangen 411 des Klauenteils 41 der Tragkonsole 4 ein Anschlagkörper 7 aus, wo er mit Schraubstift-Verbindungen 8 befestigt ist. Der Anschlagkörper 7 endet oberhalb des oberen T-Schenkels 31 der Tragpratze 3 mit einem geringen Spiel. Als alternative Lösung sind auch zwei Anschlagkörper 9 möglich, die von den inneren Seitenwangen 411 des Klauenteils 41 der Tragkonsole 4 ausgehend jeweils oberhalb des unteren T-Schenkels 32 der Tragpratze 3 mit geringem Spiel enden (siehe auch Fig. 4). Das radiale Spiel der Tragpratze 3 wird aufgrund des Spieles der Anschlagkörper 7 oder 9 nicht behindert und auch der Wärmeübergang klein gehalten. Das untere Ende des Stützschenkelteils 43 wird in der Nische im biologischen Schild 2 von einer schräg zur Horizontalen, geneigt verlaufenden Stützfläche 10 aufgenommen.

Diese Nische ist mit Rahmenplatten 11 ausgekleidet, die ein Teil der Betonschalung sind, welche zum Giessen des biologischen Schildes 2 benötigt wurde. Eine Richt- und Druckplatte 12 verbessert die Kraftübertragung von der Tragkonsole 4 auf den Beton des biologischen Schildes 2. Zwischen ihr und der Tragkonsole 4 ist eine weitere Passplatte 13 eingeschaltet. Um ein Abgleiten der Tragkonsole 4 aus der Nische zu verhindern, sind vom unteren Ende des Stützschenkelteils 43 der Tragkonsole 4 ausgehende Zuganker 14 vorhanden. Diese werden durch den biologischen Schild 2 geführt und von aussen gespannt. Dazu dienen mit einem Gewindeschutz 15 versehene Zugankerspannmuttern 16, die sphärisch gekrümmte Unterlegscheiben 17 und 18 aufweisen und über Druckplatten 19 und 20 die Kraft auf die Betonstruktur des biologischen Schildes 2 übertragen. Die Druckplatten 20 sind wie die Rahmenplatten 11 ein Rest der Betonschalung für den biologischen Schild 2. Entsprechend gespannte Zuganker 21 greifen auch am oberen Ende der Tragkonsole 4 an. Dort ist der Raum zwischen Tragkonsole 4 und der mit Rahmenplatten 11 verkleideten Nischenwand 22 durch eine obere Richt- und Druckplatte 23 ausgefüllt, die durch eine dritte Passplatte 24 justiert wird. Zur Kühlung der Tragkonsole 4 sind Kühlluftkanäle 25 vorhanden. Da die heissen Tragpratzen 3 des Reaktordruckbehälters 1 nicht mit der Kühlluft in Berührung kommen sollen, sind diese durch Wärmedämmplatten 26 abgeschirmt, die nur für die Durchführung der Anschlagkörper 7 und 9 durchbrochen sind. Wärmedämmplatten 26 umgeben auch den gesamten Reaktordruckbehälter 1, der im unteren Bereich ausser durch den biologischen Schild 2 auch durch die Betonstruktur eines inneren biologischen Schildes 27 abgeschirmt wird.

Fig. 2 zeigt einen Querschnitt durch einen Reaktordruckbehälter 1 und den ihn umgebenden biologischen Schild 2. Anschlüsse für zwei Primärrohrleitungspaare 60 und 61 sowie 62 und 63 und vier Notkühlleitungen 64 sind vorhanden. Über die Moderatorleitung 65 wird schweres Wasser eingespeist, das über die zweite Moderatorleitung 66 abgeführt wird. Vier Tragpratzen 3 mit zugehörigen Tragkonsolen 4 sind so am Reaktordruckbehälter 1 befestigt, dass je zwei Tragpratzen 3 unmittelbar neben und ausserhalb der Anschlüsse eines Primärrohrleitungspaares 60 und 61, bzw. 62 und 63 den Reaktordruckbehälter 1 abstützen und dabei jeweils einen Winkelabstand von 96° aufweisen. Anschlagkörper 7, wie in Fig. 1 dargestellt, die mit Schraubstift-Verbindungen 8 befestigt sind, verhindern ein Abheben des Reaktordruckbehälters 1 von den Tragkonsolen 4. Tangentialanschläge 67 justieren die Tragkonsolen 4 in den Nischen im biologischen Schild 2 und Richtplatten 68 justieren die Tragpratzen 3 im Klauenteil 41 der Tragkonsolen 4. Im Bereich der in Fig. 1 gezeigten Nischen für die Tragkonsolen 4 ist die Wandstärke der Spannbetonkonstruktion des biologischen Schildes 2 vergrössert, indem der kreisförmige Querschnitt des Innenraumes der Spannbetonkonstruktion dort durch Sehnen 69 eingeengt wird. Zuganker 14 und 21 dienen der Arretierung der Tragkonsolen 4 in den Nischen in der Betonstruktur des biologischen Schildes 2. Vom unteren Ende des Stützschenkelteils 43 jeder Tragkonsole 4 gehen von innen nach aussen aufgefächert drei Zuganker 14 aus, die die Betonstruktur durchdringen. Vom oberen Ende des Klauenteils 41 jeder Tragkonsole 4 gehen, ebenfalls von innen nach aussen aufgefächert, fünf Zuganker 21 aus. Die Befestigung der Zuganker 14 und 21 erfolgt, wie in Fig. 1 dargestellt, mittels Zugankerspannmuttern 16, die die Kraft über sphärische Unterlegscheiben 17 und 18 und Druckplatten 19 und 20 auf die Betonstruktur des biologischen Schildes 2 übertragen.

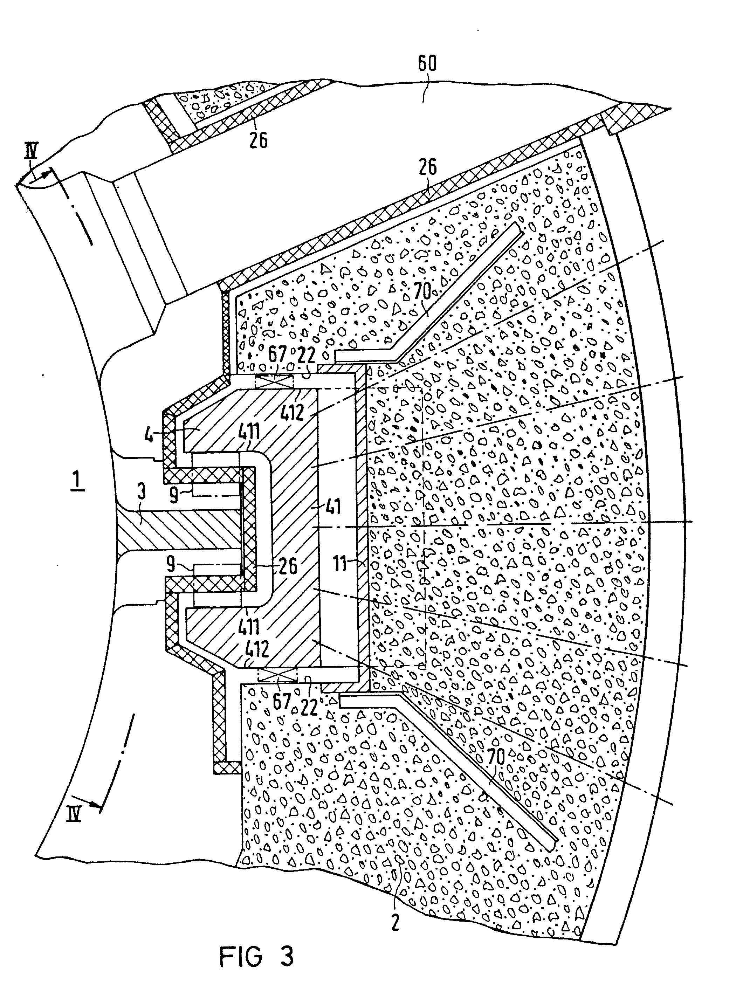

Fig. 3 zeigt einen Querschnitt entlang der in Fig. 1 dargestellten Schnittebene III-III. Die am Reaktordruckbehälter 1 angeschweisste Tragpratze 3 ist gegen Kühlluftströme mit Wärmedämmplatten 26 abgeschirmt. In einer Nische in der Betonstruktur des biologischen Schildes 2 befindet sich der einen U-förmigen Querschnitt aufweisende obere Klauenteil 41 der Tragkonsole 4. Von den inneren Seitenwangen 411 des Klauenteils 41 gehen dort die als alternative Lösung bezeichneten mit Schraubstift-Verbindungen 8 befestigten Anschlagkörper 9 aus, die mit geringem Spiel oberhalb des unteren T-Schenkels 32 der Tragpratze 3 enden. Zur Justierung der Tragkonsole 4 in der Nische des biologischen Schildes 2 sind justierbare Tangentialanschläge 67 vorhanden. Diese befinden sich zwischen den äusseren Seitenwangen 412 des U-förmigen Klauenteils 41 der Tragkonsole 4 und der Nischenwand 22.

Ein Teil der Betonschalung wird nach dem Giessen des biologischen Schildes nicht entfernt und dient als Rahmenplatten 11, die die Nische für die Tragkonsole 4 auskleiden. Die Stabilität des biologischen Schildes 2 ist durch Monierstahl 70 erhöht. Unmittelbar neben der Tragkonsole 4 mündet eine Primärrohrleitung 60 in den Reaktordruckbehälter 1, die mit Wärmedämmplatten 26 verkleidet ist.

Fig. 4 zeigt die Projektion eines Schnittes entlang der Schnittfläche IV-IV im Bereich der Tragpratze 3. Die Tragpratze 3 ist doppelt-T-förmig ausgebildet und mit Wärmedämmplatten 26 umgeben. Diese verhindern einen Wärmeaustausch mit Kühlluftkanälen 25, die Kühlluft der Tragkonsole 4 zuführen. Ein Führungselement 6 erlaubt eine durch Wärmedehnung verursachte radiale Bewegung der Tragpratze 3, verhindert aber eine tangentiale Bewegung. Dadurch wird ein Abgleiten der Tragpratze 3 von der Tragkonsole 4 verhindert. Das Lager 5 stützt die Tragpratze 3 auf dem Tragboden 42 der Tragkonsole 4 ab. Ein Anschlagkörper 7 geht von den inneren Seitenwangen 411 des Klauenteils 41 der Tragkonsole 4 aus, wo er mit Schraubstift-Verbindungen 8 befestigt ist, und endet mit geringem Spiel oberhalb des oberen T-Schenkels 31 der Tragpratze 3. Als alternative Lösung sind auch zwei Anschlagkörper 9 möglich, die von den inneren Seitenwangen 411 des Klauenteils 41 der Tragkonsole 4 ausgehend jeweils oberhalb des unteren T-Schenkels 32 der Tragpratze 3 mit geringem Spiel enden (siehe auch Fig. 1). Die Anschlagkörper 7 bzw. 9 verhindern ein Abheben des Reaktordruckbehälters 1. Richtplatten 68 justieren die Tragpratze 3 innerhalb des Klauenteils 41 der Tragkonsole 4, die ihrerseits durch Tangentialanschläge 67 in einer Nische im biologischen Schild 2 justiert ist. Unmittelbar neben der Tragpratze 3 befindet sich ein Anschluss für eine Primärrohrleitung 60.

Fig. 5 zeigt einen Querschnitt entlang der in Fig. 1 dargestellten Schnittebene V-V. Im biologischen Schild 2 befindet sich eine Nische, in der der Stützschenkelteil 12 abgestützt wird. Im Bereich der Nische ist der biologische Schild 2 verstärkt, wie bereits Fig. 2 zeigt. Durch einen Ringraum 71 wird über Kühlluftkanäle 25 der Tragkonsole 4 Kühlluft zugeführt. An diesen Ringraum 71 schliesst sich nach innen die Betonstruktur eines inneren biologischen Schildes 27 an, der sich vertikal bis ca. 150 mm unterhalb des Tragbodens 42 der Tragkonsole 4 erstreckt. Wärmedämmplatten 26 verhindern einen Wärmeübergang vom heissen Reaktordruckbehälter 1 auf die Tragkonsole 4 und den biologischen Schild 2.

Im Rahmen der Erfindung würde auch eine Ausführung der Tragkonsole 4 liegen, die einen senkrecht verlaufenden Stützschenkelteil 43 aufweist. Die Achse des Stützschenkelteils 43 verläuft dann parallel, radial ausserhalb der Achse des oberen senkrechten Klauenteils 41 der Tragkonsole 4, so dass die Tragkonsole 4 als Ganzes eine Stufenform aufweist.

**Patentansprüche**

1. Vorrichtung zur Aufhängung und Abstützung von im wesentlichen zylindrischen Reaktordruckbehältern in Kernreaktoranlagen innerhalb der Reaktorkaverne eines biologischen Schildes, wobei der Reaktordruckbehälter innerhalb einer achsnormalen, horizontalen Abstützebene der oberen Behälterhälfte mit mindestens drei über seinen äusseren Umfang verteilten Tragpratzen auf entsprechenden, am biologischen Schild verankerten Tragkonsolen radialzentrisch wärmebeweglich aufgelagert ist, und wobei die Tragkonsolen am biologischen Schild so verankert und so ausgebildet sind, dass sie ausser den Vertikalkräften die Kräfte und Momente in Abhebe- und in Tangential-Richtung abfangen, dadurch gekennzeichnet, dass die Tragkonsolen (4) jeweils aus einem oberen, im Querschnitt etwa U-förmigen und einen Tragboden (42) aufweisenden Klauenteil (41) und einem vom Klauenteil (41) sich nach unten und nach aussen erstreckenden Stützschenkelteil (43) bestehen, dass die Tragpratzen (3) des Reaktordruckbehälters (1) auf dem Tragboden (42) der jeweiligen Klauenteile (41) aufgelagert und durch von inneren Seitenwangen (411) der Klauenteile (41) ausgehenden Richtplatten (68) geführt sind, und dass die Tragkonsolen (4) an Stützflächen (10) von Nischen, die am Innenumfang des biologischen Schildes (2) angeordnet sind, vertikal, radial und tangential gehalten sind, wobei der Stützschenkelteil (43) zur Abtragung der Gewichtskräfte in die Tragstruktur des biologischen Schildes (2) dient.

2. Vorrichtung nach Anspruch 1, dadurch gekennzeichnet, dass der Stützschenkelteil (43) zum Klauenteil (41) um einen spitzen Winkel zur Vertikalen nach aussen abgewinkelt verläuft und eine entsprechend abgewinkelte Nische zur Aufnahme der Tragkonsole (4) vorgesehen ist.

3. Vorrichtung nach Anspruch 2, dadurch gekennzeichnet, dass der abgewinkelte Stützschenkelteil (43) mit der winkligen, planen Stirnfläche seines unteren Endes an angepasst schräg zur Horizontalen geneigt verlaufenden Stützflächen (10) der Nischen abgestützt ist.

4. Vorrichtung nach Anspruch 2, dadurch gekennzeichnet, dass der Stützschenkelteil (43) um 20° bis 40°, insbesondere etwa um 30°, nach aussen abgewinkelt zur Vertikalen verläuft.

5. Vorrichtung nach Anspruch 1, mit mindestens je zwei spiegelsymmetrisch bezüglich einer vertikalen Behälterachsebene angeordneten Primärrohrleitungsstutzen, dadurch gekennzeichnet, dass auch die Tragpratzen (3) und zugehörigen Tragkonsolen (4) spiegelsymmetrisch angeordnet sind und je eine Tragpratze (3) und Tragkonsole (4) tangential unmittelbar neben und ausserhalb eines Primärrohrleitungsstutzen-Paares (60 und 61 bzw. 62 und 63) angeordnet sind.

6. Vorrichtung nach Anspruch 1, dadurch gekennzeichnet, dass die Tragkonsolen (4) aus Stahl einteilig geschmiedet sind.

7. Vorrichtung nach Anspruch 1, dadurch gekennzeichnet, dass zumindest die Stützflächen (10) der Nischen mit Rahmenplatten (11) als sogenannte verlorene Betonschalung ausgefüttert sind.

8. Vorrichtung nach einem der Ansprüche 1 bis 7, dadurch gekennzeichnet, dass der Klauenteil (41) und der Stützschenkelteil (43) der Tragkonsolen (4) mittels an ihnen verankerter Zuganker (14 und 21), welche die Tragstruktur des biologischen Schildes (2) insbesondere von innen nach aussen aufgefächert durchdringen, gegen die Stützflächen (10) der Nischen gehalten sind.

9. Vorrichtung nach Anspruch 8, dadurch gekennzeichnet, dass die Zuganker (14 und 21) vom Aussenumfang des biologischen Schildes (2) her spannbar sind.

10. Vorrichtung nach Anspruch 9, dadurch gekennzeichnet, dass die Stützflächen unterhalb der Zuganker-Spannmuttern (16) zur Krafteinleitung in die Betonstruktur (2) mit Druckplatten (19 und 20) versehen sind und die Muttern (16) ferner Unterlegscheiben (17 und 18) mit kugliger Einstellung aufweisen.

11. Vorrichtung nach Anspruch 1, dadurch gekennzeichnet, dass zwischen den äusseren Seitenwangen (412) der Klauenteile (41) und den anliegenden Stützflächen (22) der Nischen justierbare Tangentialanschläge (67) eingefügt sind.

12. Vorrichtung nach Anspruch 1, dadurch gekennzeichnet, dass zwischen dem unteren Ende des Stützschenkelteils (43) und den zugehörigen Stützflächen (10) der Nische eine winklige, an der Aussen- und Unterseite des Stützschenkels (43) angreifende untere Richt- und Druckplatte (12) angeordnet ist.

13. Vorrichtung nach Anspruch 12, dadurch gekennzeichnet, dass zwischen der unteren Richt- und Druckplatte (12) und der Stützschenkelunterseite eine weitere Passplatte (13) eingeschaltet ist.

14. Vorrichtung nach Anspruch 1, dadurch gekennzeichnet, dass zwischen dem oberen Ende des Klauenteils (41) und den anliegenden Stützflächen der Nische eine obere Richt- und Druckplatte (23) angeordnet und bevorzugt zwischen letzterer und dem Klauenteil (41) eine dritte Passplatte bzw. ein Gleitstein (24) vorgesehen ist.

15. Vorrichtung nach Anspruch 1, dadurch gekennzeichnet, dass die Tragpratzen (3) des Reaktordruckbehälters (1), die eine ebene horizontale Oberseite aufweisen, zur Sicherung gegen Abheben mit geringem Spiel von Anschlagkörpern (7) übergriffen werden, welche die inneren Seitenwangen (411) der Klauenteile (41) der Tragkonsolen (4) miteinander verbinden und dort in Ausnehmungen befestigt sind.

16. Vorrichtung nach Anspruch 1, dadurch gekennzeichnet, dass die Tragpratzen (3) des Reaktordruckbehälters (1) einen im wesentlichen doppel-T-förmigen Querschnitt haben und dass zur Sicherung gegen Abheben die Oberseiten der unteren T-Schenkel (32) mit geringem Spiel von Anschlagkörpern (9) übergriffen werden, welche an den inneren Seitenwangen (411) der Klauenteile (41) der Tragkonsolen (4) befestigt sind.

17. Vorrichtung nach einem der Ansprüche 1 bis 16, dadurch gekennzeichnet, dass die Wandstärke der Spannbeton-Konstruktion des biologischen Schildes (2) im Bereich der Tragkonsolen (4) durch polygonzug- oder lisenenartigen Verlauf (69) des Innenumfanges vergrössert ist.

18. Vorrichtung nach einem der Ansprüche 1 bis 16, dadurch gekennzeichnet, dass die Tragpratzen (3) mittels Wärmedämmplatten (26) gegen die an Kühlflächen der Tragkonsolen (4) vorbeistreichenden Kühlluftströme (25) abgeschirmt sind.

## Claims

1. Apparatus for the suspension and support of essentially cylindrical reactor pressure vessels for nuclear reactor systems within the reactor cavity of a biological shield, in which the reactor pressure vessel is positioned within a horizontal supporting plane, normal to the axis, of the upper half of the vessel by means of at least three supporting brackets, which are distributed around its periphery, on corresponding supporting cantilevers fastened to the biological shield, so as to be movable by heat radially with respect to the centre, and in which the supporting cantilevers are fastened to the biological shield in such manner and are so designed that, in addition to the vertical forces, they absorb the forces and moments in the lifting and in the tangential directions, characterised in that the supporting cantilevers (4) in each case consist of an upper claw part (41) which has an approximately U-shaped cross-section and has a supporting base (42), and a supporting leg part (43) which extends downwards and outwards from the claw part (41); that the supporting brackets (3) of the reactor pressure vessel (1) are positioned on the supporting bases (42) of the respective claw parts (41) and are guided by guide plates (68) which extend from inner side walls (411) of the claw parts (41); and that the supporting cantilevers (4) are arranged on supporting surfaces (10) of recesses which are arranged on the inner periphery of the biological shield (2) and are vertically, radially and tangentially held, the supporting leg part (43) serving to transfer the weight forces to the supporting structure of the biological shield (2).

2. Apparatus as claimed in Claim 1, characterised in that the supporting leg part (43) extends to the claw part (41) at an acute angle to the vertical so as to be outwardly bent and a correspondingly bent recess is provided for housing the supporting cantilever (4).

3. Apparatus as claimed in Claim 2, characterised in that the bent supporting leg part (43) has its angled, plane end face of its lower end supported on supporting surfaces (10) of the recesses which are inclined to be adjusted at an angle to the horizontal.

4. Apparatus as claimed in Claim 2, characterised in that the supporting leg part (43) is outwardly bent through 20° to 40°, in particular by about 30°, to the vertical.

5. Apparatus as claimed in Claim 1, comprising at least two primary pipe-connecting pieces which are arranged enantiomorphically in relation to a vertical axis plane of the vessel, characterised in that the supporting brackets (3) and assigned supporting cantilevers (4) are also arranged so as to be enantiomorphical and a supporting bracket (3) and supporting cantilever (4) are in each case tangentially arranged so as to be directly beside and outside a pair of primary pipe connecting pieces (60 and 61/62 and 63).

6. Apparatus as claimed in Claim 1, characterised in that the supporting cantilevers (4) are forged from steel in one piece.

7. Apparatus as claimed in Claim 1, characterised in that at least the supporting surfaces (10) of the recesses are lined with frame plates (11) as a so-called lost concrete casing.

8. Apparatus as claimed in one of Claims 1 to 7, characterised in that the claw part (41) and the supporting leg part (43) of the supporting cantilevers (4) are held against the supporting surfaces (10) of the recesses by means of tie rods (14 and 21) which are fastened thereto and which pass through the supporting structure of the biological shield (2), in particular fanning out from the inside to the outside.

9. Apparatus as claimed in Claim 8, characterised in that the tie rods (14 and 21) can be tightened from the outer periphery of the biological shield (2).

10. Apparatus as claimed in Claim 9, characterised in that, to introduce a force into the concrete structure (2), the supporting surfaces are provided with pressure plates (19 and 20) beneath the tie rod tightening nuts (16), and the nuts (16) further have washers (17 and 18) with spherical engagement.

11. Apparatus as claimed in Claim 1, characterised in that adjustable tangential stops (67) are inserted between the outer side walls (412) of the claw parts (41) and the abutting supporting surfaces (22) of the recesses.

12. Apparatus as claimed in Claim 1, characterised in that an angled lower orienting and pressure plate (12), which acts on the outside and underside of the supporting leg (43), is arranged between the lower end of the supporting leg part (43) and the assigned supporting surfaces (10) of the recess.

13. Apparatus as claimed in Claim 12, characterised in that a further fitting plate (13) is inserted between the lower orienting and pressure plate (12) and the underside of the supporting flank.

14. Apparatus as claimed in Claim 1, characterised in that an upper orienting and pressure plate (23) is arranged between the upper end of the claw part (41) and the abutting supporting surfaces of the recess, and a third fitting plate or a sliding ring (24) is preferably arranged between said upper orienting and pressure plate and the claw part (41).

15. Apparatus as claimed in Claim 1, characterised in that the supporting brackets (3) of the reactor pressure vessel (1), which have a flat horizontal upper surface, are overlapped with negligible clearance by stop bodies (7) in order to safeguard them against lifting, which stop bodies connect the inner side walls (411) of the claw parts (41) of the supporting cantilevers (4) to one another and are secured in recesses.

16. Apparatus as claimed in Claim 1, characterised in that the supporting brackets (3) of the reactor pressure vessel (1) have an essentially double T-shaped cross-section; and that for safeguarding against lifting, the upper sides of the lower T-arms (32) are overlapped by stop bodies with negligible clearance, which stop bodies are secured to the inner side walls (411) of the claw parts (41) of the supporting cantilevers (4).

17. Apparatus as claimed in one of Claims 1 to 16, characterised in that the wall thickness of the prestressed concrete construction of the biological shield (2) is increased in the region of the supporting cantilevers (4) by a polygonal or chordlike course (69) for the inner periphery.

18. Apparatus as claimed in one of Claims 1 to 16, characterised in that the supporting brackets (3) are protected against the cooling air flows (25) passing the cooling surfaces of the supporting cantilevers (4) by means of thermal insulating plates (26).

**Revendications**

1. Dispositif de suspension et de soutien de caisson sous pression essentiellement cylindriques de raccords dans des centrales nucléaires à l'intérieur de la caverne, logeant le réacteur, d'un bouclier biologique, et dans lequel le caisson sous pression du réacteur est soutenu dans une position centrée radialement et en étant mobile sous l'action de la chaleur, dans un plan horizontal, perpendiculaire à l'axe, de sa moitié supérieure à l'aide d'au moins trois pattes de support réparties sur son pourtour extérieur, sur des consoles de support correspondantes ancrées dans le bouclier biologique, et dans lequel les consoles de support sont ancrées dans le bouclier biologique et agencées de telle sorte qu'elles supportent, en dehors des forces verticales, les forces et les couples suivant la direction de soulèvement et suivant la direction tangentielle, caractérisé par le fait que les consoles de support (4) sont constituées chacune par un élément supérieur formant griffe (41) approximativement en forme de U en coupe transversale et comportant une base de support (42), et une partie (43) formant branche de support, qui s'étend vers le bas et vers l'extérieur à partir de l'élément formant griffe (41), que les pattes de support (3) du caisson sous pression (1) du réacteur sont en appui sur la base de support (42) des éléments respectifs formant griffe (41) et sont guidés par des plaques directrices (68) s'étendant à partir de parois latérales intérieures (411) des éléments formant griffes (41), et que les consoles de support (4) sont maintenues verticalement, radialement et tangentiellement sur des surfaces de support (10) de niches, qui sont disposées sur le pourtour intérieur du bouclier biologique (2), la partie (43) formant branche de support servant à transférer les forces dues au poids à la structure de support du bouclier biologique (2).

2. Dispositif suivant la revendication 1, caractérisé par le fait que la partie formant branche de support (43) s'étend par rapport à l'élément formant griffe (41) en étant coudé vers l'extérieur de manière à faire un angle aigu par rapport à la verticale et qu'il est prévu une niche coudée de façon correspondante, servant à loger la console de support (4).

3. Dispositif suivant la revendication 2, caractérisé par le fait que la partie formant branche de support (43) coudée est supportée, par la surface frontale plane oblique de son extrémité inférieure sur des surfaces de support (10) des niches, qui sont inclinées, d'une manière adaptée, par rapport à l'horizontale.

4. Dispositif selon la revendication 2, caractérisé par le fait que la partie (43) formant branche de support est coudée vers l'extérieur en faisant un angle compris entre 20° et 40°, notamment égal à environ 30° par rapport à la verticale.

5. Dispositif suivant la revendication 1, comportant au moins deux canalisation primaires disposées symétriquement par rapport à un plan axial vertical du caisson, caractérisé par le fait que les pattes de support (3) et les consoles de support associées (4) sont également disposées de façon symétrique et que respectivement une patte de support (3) et une console de support (4) sont disposées directement côte-à-côte tangentiellement et à l'extérieur d'un couple (60 et 61 ou 62 et 63) de canalisations primaires.

6. Dispositif suivant la revendication 1, caractérisé par le fait que les consoles de support (4) sont forgées d'un seul tenant en acier par forgeage.

7. Dispositif suivant la revendication 1, caractérisé par le fait qu'au moins les surfaces d'appui (10) des niches sont revêtues de plaques formant cadre (11) sous la forme de ce qu'on appelle un coffrage perdu.

8. Dispositif suivant l'une des revendications 1 à 7, caractérisé par le fait que l'élément formant griffe (41) et la partie formant branche de support (43) des consoles de support (4) sont retenues contre les surfaces d'appui (10) des niches, au moyen de tirants d'ancrage (14 et 21) ancrés sur l'élément formant griffe et la partie en forme de branche de support et qui traversent la structure de support du bouclier biologique (2), en s'étalant en éventail depuis l'intérieur vers l'extérieur.

9. Dispositif suivant la revendication 8, caractérisé par le fait que les tirants d'ancrage (14 et 21) peuvent être serrés à partir du pourtour extérieur du bouclier biologique (2).

10. Dispositif suivant la revendication 9, caractérisé par le fait que les surfaces de support sont munies de plaques de pression (19 et 20) au-dessous des écrous (16) de serrage des tirants d'ancrage, afin de transférer les forcées à la structure en béton (2), et que les écrous (16) comportent, en outre, des rondelles (17 et 18) à système de réglage sphérique.

11. Dispositif suivant la revendication 1, caractérisé par le fait que des butées tangentielles ajustables (67) sont insérées entre les parois latérales extérieures (412) des éléments formant griffes (49) et les surfaces d'appui contiguës des niches.

12. Dispositif suivant la revendication 1, caractérisé par le fait qu'entre l'extrémité inférieure de la partie formant branche de support (43) et les surfaces associées de support (10) de la niche, se trouve disposée une plaque directrice et de pression inférieure (12) s'appliquant contre la face extérieure et la face inférieure de la branche de support (43).

13. Dispositif suivant la revendication 12, caractérisé par le fait qu'une autre plaque d'ajustement (13) est insérée entre la plaque directrice et de pression inférieure (12) et la face inférieure de la branche de support.

14. Dispositif suivant la revendication 1, caractérisé par le fait qu'une plaque directrice et de pression supérieure (23) est disposée entre l'extrémité supérieure de l'élément formant griffe (42) et les surfaces de support contiguës de la niche, et qu'il est prévu de préférence entre cette plaque et l'élément formant griffe (41) une troisième plaque d'ajustement ou un bloc coulissant (24).

15. Dispositif suivant la revendication 1, caractérisé par le fait que les pattes de support (3) du caisson sous pression (1) du réacteur, possèdent une face supérieure horizontale plane, par-dessus laquelle s'engagent avec un faible jeu, en vue de réaliser une protection vis-à-vis d'un soulèvement, des organes de butée (16) qui relient entre elles les parois latérales inférieures (411) des éléments formant griffes (41) des consoles de support (4) et y sont fixés dans des évidements.

16. Dispositif suivant la revendication 1, caractérisé par le fait que les pattes de support (3) du caisson sous pression (1) du réacteur possèdent une section transversale essentiellement en forme de double T et que des organes de butée (9), qui sont fixés sur les parois latérales intérieures (411) des éléments formant griffes (41) comportant des consoles de support (4), s'engagent avec un faible jeu sur les faces supérieures des branches en T inférieures (32), afin de réaliser une protection contre le soulèvement.

17. Dispositif suivant l'une des revendications 1 à 16, caractérisé par le fait que l'épaisseur de la paroi de la construction en béton précontraint du bouclier biologique (2) est accrue dans la zone des consoles de support (4), par une configuration (69) en forme de contour polygonal ou lenticulaire du pourtour intérieur.

18. Dispositif suivant l'une des revendications 1 à 7, caractérisé par le fait que les pattes de support (3) sont protégées au moyen de plaques de calorifugeage (26) contre les courants d'air froid (25) circulant sur les surfaces froides des consoles de support (4).

FIG 1

FIG 2

FIG 3

0 086 407

FIG 4

FIG 5